(19) Europäisches Patentamt / European Patent Office / Office européen des brevets

(11) **EP 2 744 279 A2**

(12) **EUROPEAN PATENT APPLICATION**

(43) Date of publication:
**18.06.2014 Bulletin 2014/25**

(51) Int Cl.:
***H04W 52/24*** *(2009.01)* ***H04W 52/22*** *(2009.01)*
***H04W 52/36*** *(2009.01)* ***G09F 3/20*** *(2006.01)*

(21) Application number: **13275044.9**

(22) Date of filing: **27.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **14.12.2012 KR 20120146582**

(71) Applicant: **Samsung Electro-Mechanics Co., Ltd
Suwon, Gyunggi-Do (KR)**

(72) Inventor: **Kim, Su Jong
Suwon
Gyunggi-do (KR)**

(74) Representative: **Potter Clarkson LLP
The Belgrave Centre
Talbot Street
Nottingham, NG1 5GG (GB)**

(54) **Electronic tag device and gateway device of electronic shelf labeling system, and communications method therebetween**

(57) There are provided an electronic tag device and a gateway device of an electronic shelf labeling system, and a communications method therebetween. The electronic tag device according to an embodiment of the present invention includes: a tag wireless communications unit performing wireless communications with a gateway device of the electronic shelf labeling system; a tag control unit determining whether a prepared transmission power gain is present, at the time of generation of a transmission event, and if present, controlling a transmission power according to the transmission power gain, and if not present, controlling the transmission power to be a maximum transmission power; and a tag memory storing a plurality of RF strengths, an accumulated average value of the RF strengths, and the transmission power gain that are provided from the tag control unit.

FIG. 2

Description

CROSS-REFERENCE TO RELATED APPLICATIONS

This application claims the priority of Korean Patent Application No. 10-2012-0146582 filed on December 14, 2012, in the Korean Intellectual Property Office, the disclosure of which is incorporated herein by reference.

BACKGROUND OF THE INVENTION

Field of the Invention

The present invention relates to an electronic tag device and a gateway device of an electronic shelf labeling system capable of controlling transmission power based on an accumulated average value of RF strengths, and a communications method therebetween.

Description of the Related Art

Generally, an electronic shelf labeling (ESL) system is a system that may be disposed in a location in which products are displayed and display product information based on wired and wireless communications. In the electronic shelf labeling system, a plurality of electronic tag devices (TAGs) for displaying price information configure a personal area network (PAN) to perform wireless communications with a gateway (GW) device. Further, the plurality of gateway devices perform wired communications with a server.

In the electronic shelf labeling system according to the related art, the plurality of electronic tag devices and the plurality of gateway devices perform wireless communications therebetween.

In this case, the electronic tag device, a standalone device, is operated by a battery, and therefore requires a low power operating method. Among various low power operating methods, a low power communications technique is applied to the electronic shelf labeling (ESL) system, and therefore a lifespan of the electronic tag device may be lengthened.

In consideration of the configuration of the electronic shelf labeling system, individual electronic tag devices (TAGs) have very different distance distributions from the gateway (GW) devices and are disposed at an interval of a maximum of 15 meters, starting from the electronic tag device (TAG) near the gateway (GW) device.

However, in the existing electronic shelf labeling system, the electronic tag devices and the gateway devices perform communications with each other at maximum power at all times, without consideration of the distances therebetween or the communications environment in which they are located, even though the distances between the gateway devices and the electronic tag devices may be different from each other, whereby power consumption may be increased.

Patent Document 1 disclosed in the following related art document relates to an apparatus and a method for setting transmission power of a small base station in a wireless communications system and fails to disclose technical matters for controlling transmission power based on an accumulated average value of RF strengths.

[Related Art Document]

(Patent Document 1) Korean Patent Laid-Open Publication No. 2009-0004370

SUMMARY OF THE INVENTION

An aspect of the present invention provides an electronic tag device and a gateway device of an electronic shelf labeling system capable of controlling transmission power based on an accumulated average value of RF strengths, and a communications method therebetween.

According to an aspect of the present invention, there is provided an electronic tag device of an electronic shelf labeling system, including: a tag wireless communications unit performing wireless communications with a gateway device of the electronic shelf labeling system; a tag control unit determining whether a prepared transmission power gain is present, at the time of generation of a transmission event, and if present, controlling a transmission power according to the transmission power gain, and if not present, controlling the transmission power to be a maximum transmission power; and a tag memory storing a plurality of RF strengths, an accumulated average value of the RF strengths, and the transmission power gain that are provided from the tag control unit.

The tag control unit may measure and store the RF strengths based on an RF signal when the RF signal is received from the gateway device through the tag wireless communications unit, obtain the accumulated average value of the RF strengths based on the RF strengths stored to date, calculate the transmission power gain using the accumulated average value of the RF strengths, and store the calculated transmission power gain in the tag memory.

The tag control unit may calculate the transmission power gain based on the following Equation,

$$Transmission \quad (TX) \quad Power \quad Gain \quad = \frac{V\max}{AVrssi} + (AVrssi * Rstep) * (1 + communications\ failure\ frequency)$$

where Vmax represents a maximum value of receive sensitivity, AVrssi represents the accumulated average value of the RF strengths, and Rstep represents a power step ratio.

According to another aspect of the present invention, there is provided a gateway device of an electronic shelf labeling system, including: a GW wireless communications unit performing wireless communications with a plurality of electronic tag devices of the electronic shelf labeling system; a GW control unit measuring and storing RF strength of the corresponding electronic tag device based on an RF signal when the RF signal is received through the GW wireless communications unit, obtaining an accumulated average value of the RF strengths based on the RF strengths stored to date, and calculating a transmission power gain based on the accumulated average value of the RF strengths; and a GW memory storing the plurality of RF strengths, the accumulated average value of the RF strengths, and the transmission power gain that are provided from the GW control unit.

The GW control unit may calculate the transmission power gain based on the following Equation,

$$Transmission \quad (TX) \quad Power \quad Gain \quad = \frac{V\max}{AVrssi} + (AVrssi * Rstep) * (1 + communication\ failure\ frequency)$$

where Vmax represents a maximum value of receive sensitivity, AVrssi represents the accumulated average value of the RF strengths, and Rstep represents a power step ratio.

According to another aspect of the present invention, there is provided a communications method of an electronic shelf labeling system, including: processing RF transmission with a transmission power controlled according to whether a prepared transmission power gain is present, at the time of generation of a transmission event, in an electronic tag device of the electronic shelf labeling system; calculating the transmission power gain using RF strengths based on an RF signal and an accumulated average value of the RF strengths when the RF signal is received; and controlling a transmission power using the transmission power gain to transmit the RF signal to a gateway device of the electronic shelf labeling system.

The processing of the RF transmission may include: determining the generation of the transmission event in the gateway device of the electronic shelf labeling system; determining whether the prepared transmission power gain is present, at the time of generation of the transmission event, and if present, controlling the transmission power according to the transmission power gain, and if not present, controlling the transmission power to be a maximum transmission power; and processing the RF transmission corresponding to the generated transmission event.

The calculating of the transmission power gain may include: receiving and processing the RF signal from the gateway device through the tag wireless communications unit; measuring and storing the RF strengths based on the RF signal and obtaining the accumulated average value of the RF strengths based on the RF strengths stored to date; and calculating the transmission power gain based on the accumulated average value of the RF strengths.

In the calculating of the transmission power gain, the transmission power gain may be calculated based on the following Equation,

$$Transmission \quad (TX) \quad Power \quad Gain \quad = \frac{V\max}{AVrssi} + (AVrssi * Rstep) * (1 + communication\ failure\ frequency)$$

where Vmax represents a maximum value of receive sensitivity, AVrssi represents the accumulated average value of the RF strengths, and Rstep represents a power step ratio.

According to another aspect of the present invention, there is provided a communications method of a gateway device of an electronic shelf labeling system, including: calculating a transmission power gain for a corresponding electronic tag device using RF strengths based on an RF signal and an accumulated average value of the RF strengths, when the RF signal is received, in the gateway device; and controlling a transmission power using the transmission power gain to transmit the RF signal to the corresponding electronic tag device.

The calculating of the transmission power gain may include: receiving and processing the RF signal from the gateway device through the tag wireless communications unit; measuring and storing the RF strengths based on the RF signal and obtaining the accumulated average value of the RF strengths based on the RF strengths stored to date; and calculating the transmission power gain based on the accumulated average value of the RF strengths.

In the calculating of the transmission power gain, the transmission power gain may be calculated based on the following Equation,

$$\text{Transmission (TX) Power Gain} = \frac{V\max}{AVrssi} + (AVrssi * Rstep) * (1 + \text{communication failure frequency})$$

where Vmax represents a maximum value of receive sensitivity, AVrssi represents the accumulated average value of the RF strengths, and Rstep represents a power step ratio.

**BRIEF DESCRIPTION OF THE DRAWINGS**

The above and other aspects, features and other advantages of the present invention will be more clearly understood from the following detailed description taken in conjunction with the accompanying drawings, in which:

FIG. 1 is a schematic configuration diagram of an electronic shelf labeling system according to an embodiment of the present invention;
FIG. 2 is a block diagram of an electronic tag device according to an embodiment of the present invention;
FIG. 3 is a block diagram of a gateway device according to an embodiment of the present invention;
FIG. 4 is a flowchart illustrating a communications method between an electronic tag device and a gateway device according to an embodiment of the present invention;
FIGS. 5A and 5B are graphs illustrating RF strengths at a distance of 5M between the electronic tag device and the gateway device according to the embodiment of the present invention and an accumulated average value of RF strengths; and
FIGS. 6A and 6B are graphs illustrating RF strengths at a distance of 8M between the electronic tag device and the gateway device according to the embodiment of the present invention and an accumulated average value of RF strengths.

**DETAILED DESCRIPTION OF THE EMBODIMENTS**

Hereinafter, embodiments of the present invention will be described in detail with reference to the accompanying drawings.

The invention may, however, be embodied in many different forms and should not be construed as being limited to the embodiments set forth herein. Rather, these embodiments are provided so that this disclosure will be thorough and complete, and will fully convey the scope of the invention to those skilled in the art.

Throughout the drawings, the same or like reference numerals will be used throughout to designate the same or like elements.

Hereinafter, embodiments of the present invention will be described in detail with reference to the accompanying drawings so that those skilled in the art may easily practice the present invention.

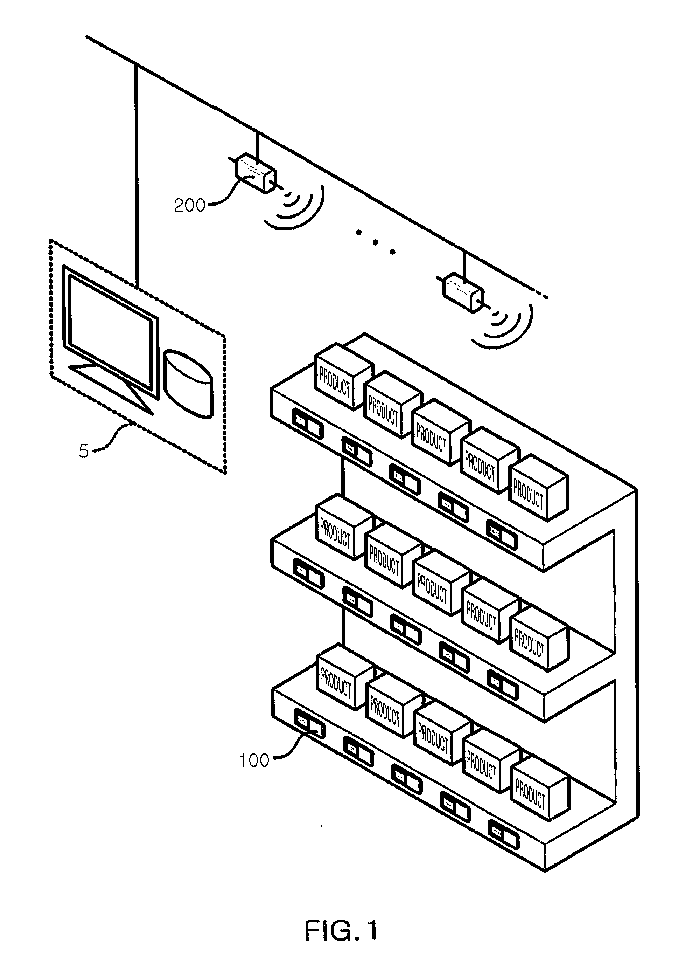

FIG. 1 is a schematic configuration diagram of an electronic shelf labeling system according to an embodiment of the present invention.

Referring to FIG. 1, the electronic shelf labeling system according to the embodiment of the present invention may include a server 5, an electronic tag device 100, and a gateway device 200.

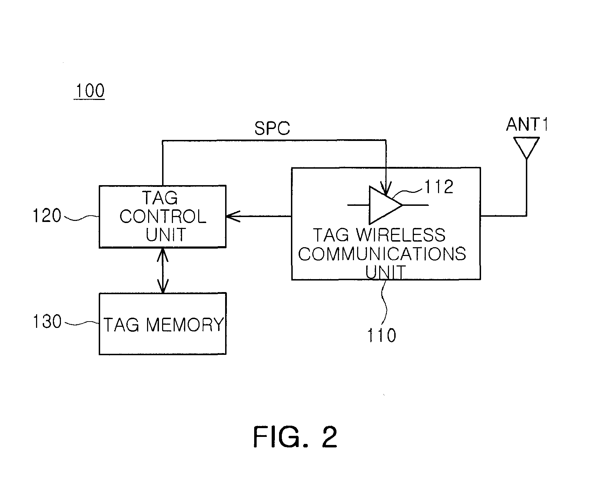

FIG. 2 is a block diagram of an electronic tag device according to the embodiment of the present invention.

Referring to FIG. 2, the electronic tag device according to the embodiment of the present invention may include a tag wireless communications unit 110, a tag control unit 120, and a tag memory 130.

Further, the electronic tag device according to the embodiment of the present invention may include power supply units (not illustrated) for supplying required power to the tag wireless communications unit 110, the tag control unit 120, and the tag memory 130, respectively. Herein, the power supply units are configured of individual batteries, and therefore an optimal power management method is required.

The tag wireless communications unit 110 performs wireless communications with the gateway device 200 of the electronic shelf labeling system. Herein, the wireless communications may follow predetermined communication protocols.

Further, the tag wireless communications unit 110 may include a power amplifier 112 of which power gain varies according to a power control signal (SPC) of the tag control unit 120.

The tag control unit 120 determines whether a prepared transmission (TX) power gain is present at the time of generation of a transmission event, and if present, the tag control unit 120 may control transmission power of the tag wireless communications unit 110 according to the transmission (TX) power gain, and if not present, may control the power of the tag wireless communications unit 110 to be a maximum transmission power.

Therefore, the tag wireless communications unit 110 may amplify a power of a transmission signal with the power gain according to the controlling of the tag control unit 120 and transmit the amplified power.

The tag memory 130 may store a plurality of RF strengths, an accumulated average value of the RF strengths, and the transmission (TX) power gain that are provided from the tag control unit 120.

Described in more detail, when an RF signal from the gateway device 200 is received through the tag wireless communications unit 110, the tag control unit 120 measures RF strengths based on the RF signal and stores the measured RF strengths in the tag memory 130.

Next, the tag control unit 120 may obtain the accumulated average value of the RF strengths based on the RF strengths currently stored in the tag memory 130 and may calculate the transmission (TX) power gain based on the accumulated average value of the RF strengths.

In this case, the tag memory 130 stores the RF strengths measured whenever the RF signal is input according to the controlling of the tag control unit 120, and when new RF strength is measured, the accumulated average value of the RF strengths and the transmission (TX) power gain may be updated.

The tag control unit 120 may calculate the transmission (TX) power gain based on the following Equation 1:

$$\text{Transmission} \quad \text{(TX)} \quad \text{Power} \quad \text{Gain} \quad =$$

$$\frac{V\max}{AVrssi} + (AVrssi * Rstep) * (1 + \text{communication failure frequency}) \quad \dots \text{Equation 1}$$

In the above Equation 1, Vmax represents a maximum value of receive sensitivity, AVrssi represents an accumulated average value of RF strengths, and Rstep represents a power step ratio. The Rstep may be determined according to the characteristics, communications environment, and the like, of the applied electronic shelf labeling system, and may be set to, for example, 5% (0.05).

Referring to the above Equation 1, the transmission (TX) power gain is in proportion to the maximum value Vmax of receive sensitivity and is in inverse proportion to the accumulated average value AVrssi of the RF strengths. Further, it can be appreciated that the transmission (TX) power gain is a function of the power step ratio (Rstep) and the communications failure frequency.

For example, when the maximum value Vmax of receive sensitivity is 90 dBm, the accumulated average value AVrssi of the RF strengths is 50 dBm, the power step ratio Rsetp is 0.05, and the communications failure frequency is 0, the transmission (TX) power gain may be 4.3 [dB] (=90/50 + 50*0.05*0.1).

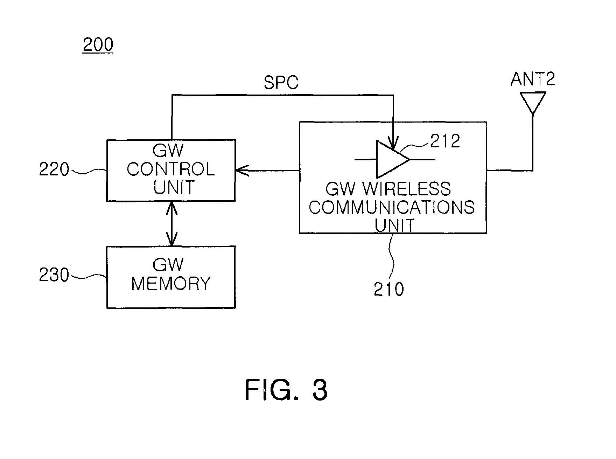

FIG. 3 is a block diagram of a gateway device according to an embodiment of the present invention.

Referring to FIG. 3, the gateway device 200 according to the embodiment of the present invention may include a GW wireless communications unit 210, a GW control unit 220, and a GW memory 230 storing a plurality of RF strengths, an accumulated average value of the RF strengths, and a transmission (TX) power gain provided from the GW control unit 220.

The GW wireless communications unit 210 may perform wireless communications with the plurality of electronic tag devices 100 of the electronic shelf labeling system. Herein, the wireless communications may follow predetermined communication protocols, like the tag wireless communications unit 110 of the electronic tag device 100.

Further, the GW wireless communications unit 210 may include a power amplifier 212 of which power gain varies according to a power control signal (SPC) of the GW control unit 220.

Therefore, the GW wireless communications unit 210 may amplify a power of a transmission signal with the power gain according to the controlling of the GW control unit 220 and transmit the amplified power.

The GW memory 230 may store the plurality of RF strengths, the accumulated average value of the RF strengths, and the transmission power gain that are provided from the GW control unit 220.

When an RF signal is received through the GW wireless communications unit 210, the GW control unit 220 may measure the RF strengths of the corresponding electronic tag device based on the RF signal and store the measured RF strengths in the GW memory 230.

Next, the GW control unit 220 may obtain the accumulated average value of the RF strengths based on the RF strengths currently stored in the GW memory 230 and may calculate the transmission (TX) power gain for each of the corresponding electronic tag devices based on the accumulated average value of the RF strengths.

In this case, the GW memory 230 stores the RF strengths for each of the corresponding electronic tag devices measured whenever the RF signal is input according to the controlling of the GW control unit 220, and when new RF strength is measured, the accumulated average value of the RF strengths and the transmission (TX) power gain for each of the corresponding electronic tag devices may be updated.

The GW control unit 220 may calculate the transmission (TX) power gain based on the above Equation 1.

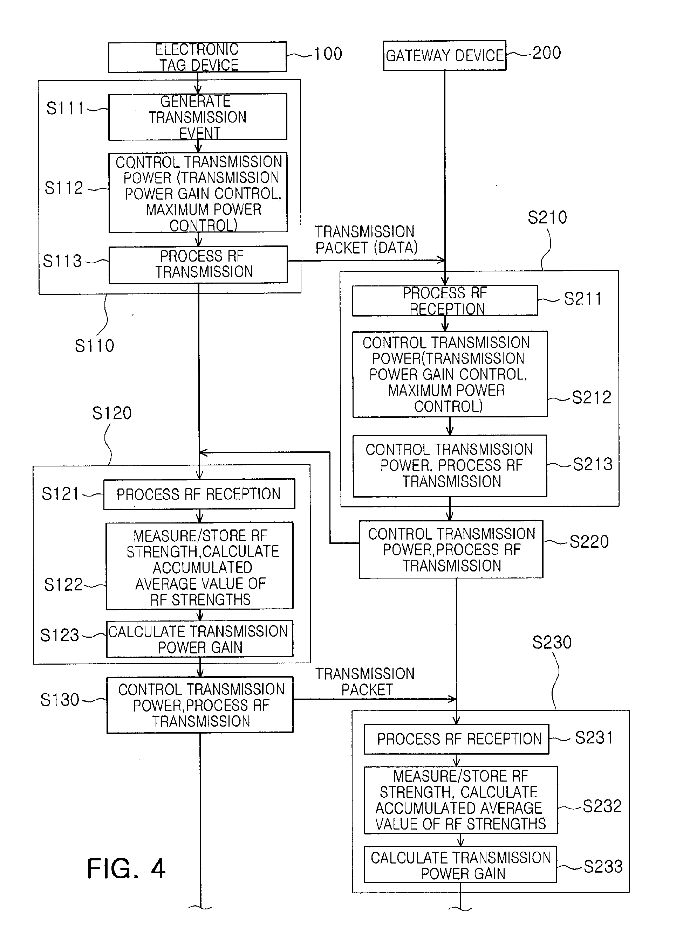

FIG. 4 is a flowchart illustrating a communications method between the electronic tag device and the gateway device according to an embodiment of the present invention.

The communications method of the electronic tag device according to the embodiment of the present invention will be described with reference to FIGS. 1 to 4.

First, in operation S110, the electronic tag device 100 of the electronic shelf labeling system may process RF transmission with a transmission power controlled according to whether a prepared transmission (TX) power gain is present, at the time of generation of a transmission event.

Next, in operation S120, when an RF signal is received, the electronic tag device 100 may calculate the transmission (TX) power gain using RF strengths based on the RF signal and an accumulated average value of the RF strengths.

Next, in operation S130, the electronic tag device 100 may control the transmission power using the transmission (TX) power gain to transmit the RF signal to the gateway device 200.

For example, in the processing of the RF transmission (S110), first, the gateway device 200 of the electronic shelf labeling system may determine the generation of the transmission event in operation S111.

Next, at the time of the generation of the transmission event, it is determined whether the prepared transmission (TX) power gain is present in operation S112, and if present, the transmission power may be controlled according to the transmission (TX) power gain, and if not present, the transmission power may be controlled to be a maximum transmission power.

Further, the RF transmission corresponding to the generated transmission event may be processed in operation S113.

For example, in the calculating of the transmission (TX) power gain (S120), first, the RF signal may be received from the gateway device 200 through the tag wireless communications unit 110 and processed in operation S121.

Next, in operation S122, the RF strengths are measured based on the RF signal and the measured RF strengths are stored, and the accumulated average value of the RF strengths may be obtained based on the RF strengths stored to date.

Further, the transmission (TX) power gain may be calculated based on the accumulated average value of the RF strengths in operation S123.

In the calculating of the transmission (TX) power gain (S120), the transmission (TX) power gain may be calculated based on the following Equation 2.

[Equation 2]

$$\text{Transmission (TX) Power Gain} =$$

$$\frac{V\max}{AVrssi} + (AVrssi * Rstep) * (1 + \text{communication failure frequency}) \quad \text{... Equation 2}$$

In the above Equation 2, Vmax represents a maximum value of receive sensitivity, AVrssi represents an accumulated average value of RF strengths, and Rstep represents a power step ratio. The Rstep may be determined according to the characteristics, communications environment, and the like, of the applied electronic shelf labeling system, and may be set to, for example, 5% (0.05).

Referring to the above Equation 1, the transmission (TX) power gain is in proportion to the maximum value Vmax of receive sensitivity and is in inverse proportion to the accumulated average value AVrssi of the RF strengths.

Further, it can be appreciated that the transmission (TX) power gain is a function of the power step ratio (Rstep) and the communications failure frequency.

Further, the communications method of the gateway device according to the embodiment of the present invention will be described with reference to FIGS. 1 to 4.

First, in operation S210, when the RF signal is received, the gateway device 200 of the electronic shelf labeling system may calculate the transmission (TX) power gain for the corresponding electronic tag device using the RF strengths based on the RF signal and the accumulated average value of the RF strengths.

Further, in operation S220, the gateway device 200 may control the transmission power using the transmission (TX) power gain to transmit the RF signal to the corresponding electronic tag device.

For example, in the calculating of the transmission (TX) power gain (S210), first, the RF signal may be received from the gateway device 200 through the tag wireless communications unit 110 and processed in operation S211.

Next, in operation S212, the RF strengths are measured based on the RF signal and the measured RF strengths are stored, and the accumulated average value of the RF strengths may be obtained based on the RF strengths stored to date.

Further, the transmission (TX) power gain may be calculated based on the accumulated average value of the RF strengths in operation S213.

In the calculating of the transmission (TX) power gain (S210), the transmission (TX) power gain may be calculated based on the above Equation 2.

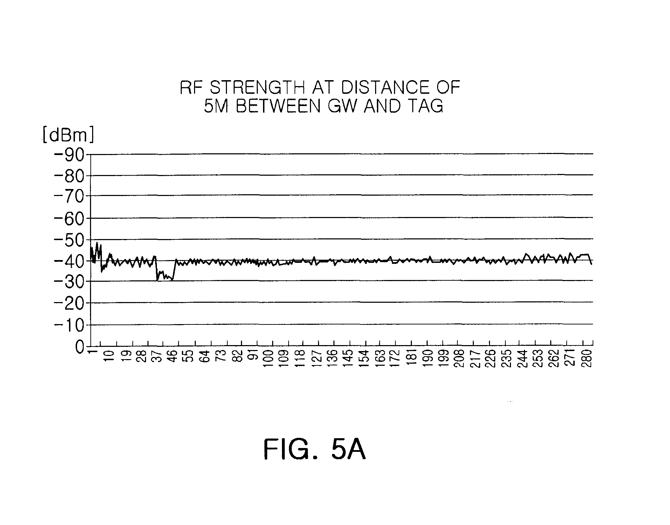

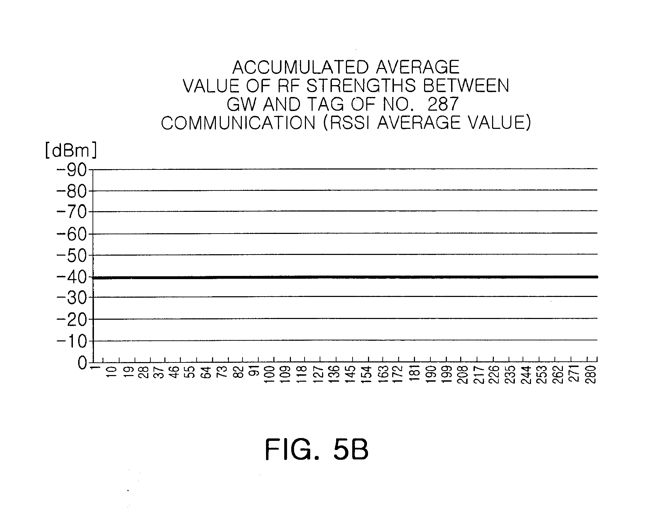

FIGS. 5A and 5B are graphs illustrating RF strengths (normal RSSI) at a distance of 5M between the electronic tag device and the gateway device according to the embodiment of the present invention and an accumulated average value of the RF strengths. Herein, the RF strengths may be the received strength based on received signal strength indication (RSSI).

Referring to the graph of RF strengths (Normal RSSI) illustrated in FIG. 5A, it can be appreciated that the RF strengths (normal RSSI) at a distance of 5M between the electronic tag device 100 and the gateway device 200 may not be uniform.

Referring to the graph of the accumulated average value of RF strengths illustrated in FIG. 5B, it can be appreciated that the accumulated average value of RF strengths at a distance of 5M between the electronic tag device 100 and the gateway device 200 may be uniform.

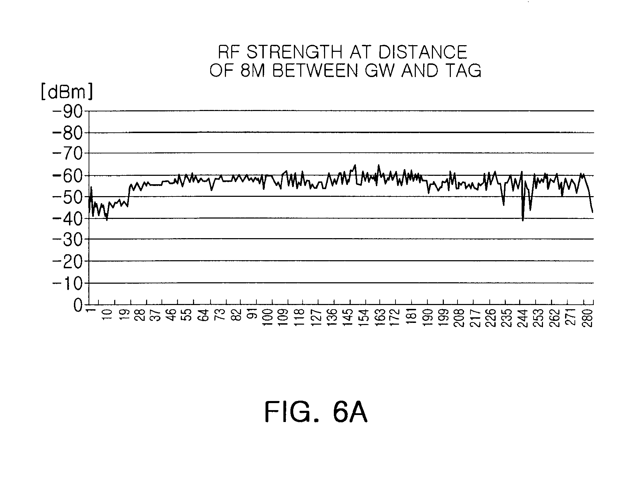

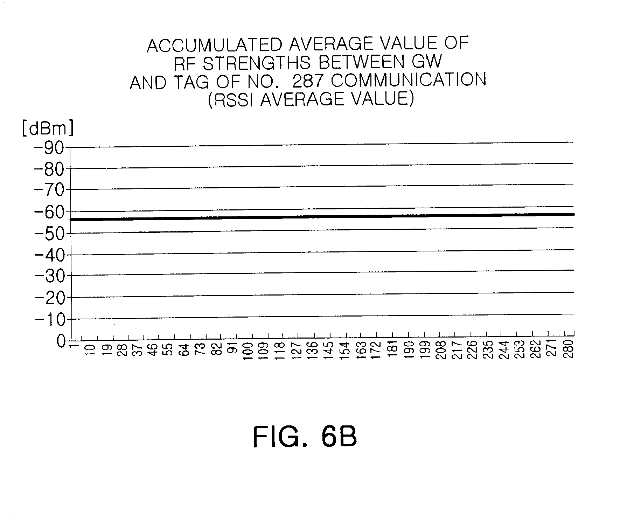

FIGS. 6A and 6B are graphs illustrating RF strengths (normal RSSI) at a distance of 8M between the electronic tag device and the gateway device according to the embodiment of the present invention and an accumulated average value of the RF strengths.

Referring to the graph of RF strengths (Normal RSSI) illustrated in FIG. 6A, it can be appreciated that the RF strengths (normal RSSI) at a distance of 8M between the electronic tag device 100 and the gateway device 200 may not be uniform.

Referring to the graph of the accumulated average value of RF strengths illustrated in FIG. 6B, it can be appreciated that the accumulated average value of RF strengths at a distance of 8M between the electronic tag device 100 and the gateway device 200 may be uniform.

As set forth above, according to the embodiments of the present invention, the power consumption of the electronic tag device and the gateway device in the electronic shelf labeling system can be reduced, in particular, the lifespan of the battery included in the electronic tag device can be extended, by controlling the transmission power based on the accumulated average value of the RF strengths.

Therefore, an adverse effect, such as RF collision with another electronic tag device and RF interference, can be prevented, and therefore, the stability of the electronic shelf labeling system can be promoted.

As described above, in the embodiments of the present invention, the transmission power gain is calculated based on the accumulated average value of the RF strengths, without depending on the RF strengths varying according to the communications environment, to thereby be relatively uniform, so that the wireless communications may be performed more stably without wasting the transmission power.

While the present invention has been shown and described in connection with the embodiments, it will be apparent to those skilled in the art that modifications and variations can be made without departing from the spirit and scope of the invention as defined by the appended claims.

**Claims**

1. An electronic tag device of an electronic shelf labeling system, comprising:

   a tag wireless communications unit performing wireless communications with a gateway device of the electronic shelf labeling system;

a tag control unit determining whether a prepared transmission power gain is present, at the time of generation of a transmission event, and if present, controlling a transmission power according to the transmission power gain, and if not present, controlling the transmission power to be a maximum transmission power; and

a tag memory storing a plurality of RF strengths, an accumulated average value of the RF strengths, and the transmission power gain that are provided from the tag control unit.

2. The electronic tag device of claim 1, wherein the tag control unit measures and stores the RF strengths based on an RF signal when the RF signal is received from the gateway device through the tag wireless communications unit, obtains the accumulated average value of the RF strengths based on the RF strengths stored to date, calculates the transmission power gain using the accumulated average value of the RF strengths, and stores the calculated transmission power gain in the tag memory.

3. The electronic tag device of claim 1, wherein the tag control unit calculates the transmission power gain based on the following Equation,

$$\text{Transmission (TX) Power Gain} =$$

$$\frac{V\max}{AVrssi} + (AVrssi * Rstep) * (1 + \text{communicat ion failure frequency})$$

where Vmax represents a maximum value of receive sensitivity, AVrssi represents the accumulated average value of the RF strengths, and Rstep represents a power step ratio.

4. A gateway device of an electronic shelf labeling system, comprising:

a GW wireless communications unit performing wireless communications with a plurality of electronic tag devices of the electronic shelf labeling system;

a GW control unit measuring and storing RF strength of the corresponding electronic tag device based on an RF signal when the RF signal is received through the GW wireless communications unit, obtaining an accumulated average value of the RF strengths based on the RF strengths stored to date, and calculating a transmission power gain based on the accumulated average value of the RF strengths; and

a GW memory storing the plurality of RF strengths, the accumulated average value of the RF strengths, and the transmission power gain that are provided from the GW control unit.

5. The gateway device of claim 4, wherein the GW control unit calculates the transmission power gain based on the following Equation,

$$\text{Transmission (TX) Power Gain} =$$

$$\frac{V\max}{AVrssi} + (AVrssi * Rstep) * (1 + \text{communicat ion failure frequency})$$

where Vmax represents a maximum value of receive sensitivity, AVrssi represents the accumulated average value of the RF strengths, and Rstep represents a power step ratio.

6. A communications method of an electronic shelf labeling system, comprising:

processing RF transmission with a transmission power controlled according to whether a prepared transmission power gain is present, at the time of generation of a transmission event, in an electronic tag device of the electronic shelf labeling system;

calculating the transmission power gain using RF strengths based on an RF signal and an accumulated average value of the RF strengths when the RF signal is received; and

controlling a transmission power using the transmission power gain to transmit the RF signal to a gateway device of the electronic shelf labeling system.

7. The communications method of claim 6, wherein the processing of the RF transmission includes:

   determining the generation of the transmission event in the gateway device of the electronic shelf labeling system;
   determining whether the prepared transmission power gain is present, at the time of generation of the transmission event, and if present, controlling the transmission power according to the transmission power gain, and if not present, controlling the transmission power to be a maximum transmission power; and
   processing the RF transmission corresponding to the generated transmission event.

8. The communications method of claim 6, wherein the calculating of the transmission power gain includes:

   receiving and processing the RF signal from the gateway device through the tag wireless communications unit;
   measuring and storing the RF strengths based on the RF signal and obtaining the accumulated average value of the RF strengths based on the RF strengths stored to date; and
   calculating the transmission power gain based on the accumulated average value of the RF strengths.

9. The communications method of claim 6, wherein, in the calculating of the transmission power gain, the transmission power gain is calculated based on the following Equation,

   Transmission (TX) Power Gain =

   $$\frac{V\max}{AVrssi} + (AVrssi * Rstep) * (1 + communicat\ ion\ failure\ frequency)$$

   where Vmax represents a maximum value of receive sensitivity, AVrssi represents the accumulated average value of the RF strengths, and Rstep represents a power step ratio.

10. A communications method of a gateway device of an electronic shelf labeling system, comprising:

    calculating a transmission power gain for a corresponding electronic tag device using RF strengths based on an RF signal and an accumulated average value of the RF strengths, when the RF signal is received, in the gateway device; and
    controlling a transmission power using the transmission power gain to transmit the RF signal to the corresponding electronic tag device.

11. The communications method of claim 10, wherein the calculating of the transmission power gain includes:

    receiving and processing the RF signal from the gateway device through the tag wireless communications unit;
    measuring and storing the RF strengths based on the RF signal and obtaining the accumulated average value of the RF strengths based on the RF strengths stored to date; and
    calculating the transmission power gain based on the accumulated average value of the RF strengths.

12. The communications method of claim 10, wherein, in the calculating of the transmission power gain, the transmission power gain is calculated based on the following Equation,

    Transmission (TX) Power Gain =

    $$\frac{V\max}{AVrssi} + (AVrssi * Rstep) * (1 + communicat\ ion\ failure\ frequency)$$

    where Vmax represents a maximum value of receive sensitivity, AVrssi represents the accumulated average value of the RF strengths, and Rstep represents a power step ratio.

FIG. 1

100

SPC

ANT1

TAG
CONTROL
UNIT

120

TAG WIRELESS
COMMUNICATIONS
UNIT

112

110

130

TAG MEMORY

FIG. 2

200

SPC

ANT2

220 — GW CONTROL UNIT

GW WIRELESS COMMUNICATIONS UNIT

212

210

230 — GW MEMORY

FIG. 3

FIG. 4

RF STRENGTH AT DISTANCE OF
5M BETWEEN GW AND TAG

FIG. 5A

ACCUMULATED AVERAGE
VALUE OF RF STRENGTHS BETWEEN
GW AND TAG OF NO. 287
COMMUNICATION (RSSI AVERAGE VALUE)

FIG. 5B

RF STRENGTH AT DISTANCE
OF 8M BETWEEN GW AND TAG

FIG. 6A

ACCUMULATED AVERAGE VALUE OF
RF STRENGTHS BETWEEN GW
AND TAG OF NO. 287 COMMUNICATION
(RSSI AVERAGE VALUE)

[dBm]

## FIG. 6B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120146582

- KR 20090004370